# EUROPÄISCHE PATENTSCHRIFT

(11) **EP 1 133 418 B1**
(45) Veröffentlichungstag und Bekanntmachung des Hinweises auf die Patenterteilung: **05.10.2005**
(21) Anmeldenummer: 99958107.7
(22) Anmeldetag: 22.11.1999
(51) Int. Cl.: B60R 21/32

(54) **VERFAHREN ZUM ERKENNEN DER SCHWERE EINES FAHRZEUGZUSAMMENSTOSSES**
METHOD FOR JUDGING THE SERIOUSNESS OF A MOTOR VEHICLE CRASH
PROCEDE POUR DETERMINER L'IMPORTANCE D'UNE COLLISION DE VEHICULES

(30) Priorität: 25.11.1998 DE 19854380
(43) Veröffentlichungstag der Anmeldung: 19.09.2001
(73) Patentinhaber: Bayerische Motoren Werke Aktiengesellschaft, 80809 München (DE)
(72) Erfinder: HOLZNER, Michael, D-85567 Grafing (DE); KUHN, Andreas, D-80807 München (DE)
(86) Internationale Anmeldenummer: PCT/EP1999/008990
(87) Internationale Veröffentlichungsnummer: WO 2000/030903

(56) Entgegenhaltungen:
- EP-A- 0 709 257
- DE-A- 19 520 608
- US-A- 5 684 701

## Beschreibung

Die Erfindung bezieht sich auf ein Verfahren zum Erkennen der Schwere eines Fahrzeugzusammenstosses, bei dem das Ausgangssignal eines Beschleunigungssensors aufbereitet und einem neuronalen Netz zugeführt wird, das eine Auslöseeinheit für eine Insassenschutz-Einrichtung steuert. Ein derartiges Verfahren ist aus der US 5,583,771 A bekannt. Dabei wird das Ausgangssignal eines einzigen Beschleunigungssensors über einen definierten Zeitraum hinsichtlich seines Verlaufs gespeichert und aus dem Signalverlauf eine Reihe von Informationen wie Amplitude, Geschwindigkeitsverlauf usw. bestimmt. Diese Informationen werden als Eingangsinformationen in das neuronale Netz eingegeben, das darüber entscheidet, ob ein einziger Airbag gezündet wird.

Das bekannte Verfahren weist eine Vielzahl von Nachteilen auf. Zum einen ist es erforderlich den Verlauf des Crash-Signals über einen vorgegebenen Zeitraum zu speichern und naturgemäß erst im Anschluss daran zu analysieren. Die Verwendung eines einzigen Beschleunigungssensors ermöglicht nicht, sämtliche möglichen Fahrzeugzusammenstösse mit ausreichender Sicherheit hinsichtlich ihrer Schwere zu erkennen.

Ursache dafür ist eine normalerweise vorhandene Richtungsabhängigkeit von Beschleunigungssensoren. Ist der Beschleunigungssensor beispielsweise in der Lage, einen Frontalcrash zu erkennen, kann ein Seitencrash dann in der Regel nicht oder zumindest nicht mit derselben Genauigkeit detektiert werden. Ein derart einziger Beschleunigungssensor ist in der Regel zentral im Fahrzeug angeordnet. Bedingt durch die Fahrzeugstruktur erfolgt die Verzögerung am Ort des Beschleunigungssensors nur verzögert und in ihrem Verlauf völlig verschieden von dem Verlauf, wie sie beispielsweise am Auftreffort eines Hindernisses erfolgt. Dies führt in der Regel zu erheblichen Problemen, die Schwere des Fahrzeugzusammenstosses tatsächlich mit hinreichender Präzision zu erkennen. Auch gibt es dadurch mitunter das Problem den Crash rechtzeitig zu erkennen. Da das neuronale Netz naturgemäß anhand vorausgehender Signalverläufe für verschiedene Zusammenstosstypen trainiert wird, lässt die Betrachtung nur eines einzigen Sensorsignals erfahrungsgemäss keinen Rückschluss auf den weiteren Verlauf des Fahrzeugzusammenstosses zu, wenn wie bei der US 5,583,771 A nur der bisherige Verlauf eines Sensors analysiert wird. Demzufolge ist das bekannte Verfahren nur eingeschränkt tauglich. Es ermöglicht lediglich eine grobe Aussage und liefert lediglich ein brauchbares Kriterium für die Entscheidung, ob eine Insassenschutzeinrichtung überhaupt ausgelöst werden soll.

Aus der US-A-5 684 701 ist ein Verfahren zum Erkennen der Schwere eines Fahrzeugzusammenstosses bekannt, bei dem das Ausgangssignal eines zentralen Beschleunigungssensors aufbereitet und einem neuronalen Netz zugeführt wird, das eine Bildmustererkennung des Beschleunigungssignals durchführt und eine Auslöseeinheit für eine Insassenschutzeinrichtung steuert, wobei ein weiterer, im Bereich des Vorderbaus angeordneter, dezentraler Crash-Sensor vorgesehen werden kann, der Eingangssignale für das neuronale Netz liefert und wobei durch die Auslöseeinheit mehrere Insassenschutzeinrichtungen entsprechend der Schwere des Fahrzeugzusammenstosses ausgelöst werden.

Der Erfindung liegt die Aufgabe zugrunde, ein Verfahren der eingangs genannten Art zu schaffen, das eine wesentlich bessere Aussage über einen Fahrzeugzusammenstoss liefert.

Die Erfindung löst diese Aufgabe durch die Merkmale des Patentanspruchs 1.

Die Verwendung einer Mehrzahl von Crash-Sensoren bietet die Möglichkeit, diese Sensoren nicht (nur) zentral, sondern auch vor Ort an den Stellen anzuordnen, die bei einem Fahrzeugzusammenstoss bevorzugt in Mitleidenschaft gezogen werden. Für einen Frontalzusammenstoss sind es Orte im Bereich des Vorderbaus, beispielsweise am Motorträger, für einen Auffahrunfall Orte im Bereich des Hinterbaus. Ein Seitencrash lässt sich vorzugsweise durch Sensoren detektieren, die im Seitenbereich des Fahrzeugs angeordnet sind. Durch die Vielzahl von Crash-Sensoren, beispielsweise insgesamt deren acht oder mehr, lässt sich nicht nur eine Aussage über die Schwere, sondern auch über den Verlauf des Fahrzeugzusammenstosses gewinnen.

Die dezentralen Crash-Sensoren und der zentrale Beschleunigungssensor liefern ein physikalisch gleichwertiges Ausgangssignal für denselben Zeitpunkt. Dieser ist bestimmt durch ein Triggersignal, das beispielsweise durch einen der Crash- Sensoren bzw. den Beschleunigungssensor dann ausgegeben wird, wenn dessen Ausgangssignal einen vorgegebenen Schwellwert überschreitet. Bei einem Fahrzeugzusammenstoss wird dies der Sensor sein, der dem Auftreffort eines Objekts am nächsten liegt. Dieser wird am stärksten von allen Sensoren in Mitleidenschaft gezogen und veranlasst die anderen Sensoren, zu ein und demselben Zeitpunkt das jeweilige Ausgangssignal zu liefern. Dieser Zeitpunkt kann beispielsweise zur Detektion der Aufprallposition des Unfallgegners 5 ms nach dem Erkennen eines Fahrzeugzusammenstosses gewählt sein.

Die Verwendung eines neuronalen Netzes bietet in der Anwendung auf eine Vielzahl von Crash- bzw. Beschleunigungssensoren den besonderen Vorteil, auch bei Ausfall eines oder mehrerer Sensoren noch eine Aussage über die Schwere und den Verlauf des Fahrzeugzusammenstosses liefern zu können. Im Gegensatz dazu ist bei der US 5,583,771 A der Ausfall des einzigen Sensors verbunden mit der Unmöglichkeit, überhaupt eine Aussage über den Fahrzeugzusammenstoss zu liefern.

Die Crash-Sensoren liefern eine physikalische Größe, die die gleiche Qualität wie die vom Beschleunigungssensor gelieferte Größe besitzt. Es kann sich dabei ebenfalls um Beschleunigungswerte handeln. Die Crash-Sensoren sind dann beispielsweise auch in der gleichen Weise wie der Beschleunigungssensor aufgebaut und arbeiten nach demselben physikalischen Prinzip.

Eine weitere Verbesserung über die Schwere und den Verlauf eines Fahrzeugzusammenstosses lässt sich dann gewinnen, wenn das Ausgangssignal der Crash-Sensoren und des Beschleunigungssensors über die Zeit integriert werden. Bei der ersten Integration ergibt sich damit eine Aussage über die Geschwindigkeit bzw. die relative Geschwindigkeit am jeweiligen Ort des Sensors.

Eine deutliche Verbesserung hinsichtlich des Aussagewertes lässt sich dann gewinnen, wenn die Ausgangssignale der Sensoren zweimal über die Zeit integriert werden. Das Ergebnis ist eine Aussage über den zurückgelegten Weg des Sensorortes. Die Aufbereitung dieser Information im neuronalen Netzwerk geschieht schnell und lässt meist bereits nach einem kurzen Verlauf des Fahrzeugzusammenstosses weitreichende Aussagen über den weiteren Verlauf des Zusammenstosses zu. Ist der Zeitpunkt, zu dem die Aussage über den zurückgelegten Weg gewonnen wird, beispielsweise wiederum gleich 5 ms zur Detektion des Aufprallortes nach dem Feststellen eines Fahrzeugzusammenstosses gewählt, liegt nach wenigen ms eine ausreichende Information vor, die es ermöglicht, bedarfsgerecht verschiedene Insassenschutzeinrichtungen zu aktivieren, bzw. sich auf einen mit hoher Wahrscheinlichkeit zu erwartenden Crashverlauf einzustellen. Neben der Anzahl der Insassenschutzeinrichtungen, die angesteuert werden, kann auch die Intensität, mit der diese Einrichtungen zur Wirkung gebracht werden, mit Hilfe des neuronalen Netzwerkes vorgegeben werden.

In der Beschreibung der Erfindung wurde bisher nur der Fall betrachtet, bei dem die Eingangssignale nur einmalig zu einem definierten Zeitpunkt in das neuronale Netz eingegeben werden. Eine weitere Verbesserung der Zuverlässigkeit der Aussage, ob und in welchem Umfang Insassenschutzvorrichtungen aktiviert werden müssen, kann erzielt werden, indem die aus den Ausgangssignalen des Beschleunigungssensors und der Crash-Sensoren gebildeten physikalischen Größen zu aufeinanderfolgenden definierten Zeitpunkten als Eingangssignale in das neuronale Netz eingegeben werden. Dies ist unter zwei Gesichtspunkten vorteilhaft.

Einerseits kann überprüft werden, ob die "Voraussage" über den weiteren Crashverlauf, wie sie anhand der vorangangenen Eingangssignale erfolgt ist, zutreffend ist. Gegebenenfalls muss eine Korrektur des Aktivierungsprogramms der Insassenschutzvorrichtungen vorgenommen werden.

Andererseits können auch Einflüsse berücksichtigt werden, die außergewöhnlich sind und/oder aus den vorhergehenden Eingangssignalen heraus nicht oder nicht deutlich genug erkennbar sind. Ein Beispiel hierfür ist der Pfahlaufprall, wo das Hindernis oft erst spät erkannt wird, nachdem dieses schon sehr weit in das Fahrzeug eingedrungen ist.

Damit ergibt sich insgesamt ein Verfahren, das es mit geringem Aufwand ermöglicht, schnell und sicher Aussagen über die Schwere und den Verlauf eines Fahrzeugzusammenstosses zu liefern und Insassenschutzeinrichtungen bedarfsgerecht anzusteuern.

Das NN (=Neuronale Netz) wird nicht wie bei der US 5,583,771 A ständig befragt, sondern es wird wie bei einem herkömmlichen Crashdetektionsalgorithmus zunächst in einem Crashfall getriggert, z.B. dadurch, daß ein gefilterter Beschleunigungswert eine gewisse Schwelle überschreitet. Daraufhin werden einige charakteristische Kennwerte der Beschleunigungsverläufe von mehreren Sensoren als *y*-Werte, nicht aber deren gesamter zeitliche Verlauf dem NN übergeben. Die Kennwerte der Beschleunigungsverläufe werden anhand von Zeitfenster- und/oder zeitlichen Doppelintegralen der Beschleunigungen und/oder diversen mathematischen Kombinationen der unterschiedlichen Signalkennwerten gewonnen. Die Anzahl der erforderlichen Eingänge in das NN ist damit nicht mehr einige Dutzend bis Hunderte sondern nur noch eine kleine Anzahl (unter 10).

Das Ausgangssignal des NN führt auch nicht zur direkten Ansteuerung der Airbags (FIRE/NOFIRE) sondern besteht in einem Parameter, welche die "Crashschwere" beschreiben (z.B. x=(Aufprallposition, Aufprallgeschwindigkeit,...) ). Wenn eine zuverlässige Aussage über die Crashschwere noch nicht möglich ist, kann das NN über eine weitere, gegenüber der ersten Triggerschwelle erhöhten und einem schwereren Crash entsprechenden Triggerschwelle getriggert und nochmals befragt werden.

Durch die Ermittlung einer Crashschwere wird eine Modularität des Algorithmus ermöglicht, so daß mehrere Einheiten (mehrere Airbags, Gurtstraffer, usw.) der Crashschwere angepaßt reagieren können.

Weil das NN nur nach Triggerung und nicht ständig aufgerufen wird und außerdem weil mit mit sehr viel stärker aufbereiteten Daten gearbeitet wird, ist auch der benötigte Aufwand schon mit der in heutigen konventionellen Steuergeräten und Prozessoren vorhandenen Rechenkapazität realisierbar. Auch können durch die stärkere Aufbereitung der Signaldaten Ergebnisse aus Crashsimulationen als Beispieldaten zum Training verwendet werden.

## Patentansprüche

1. Verfahren zum Erkennen der Schwere eines Fahrzeugzusammenstosses, bei dem das Ausgangssignal eines Beschleunigungssensors aufbereitet und einem neuronalen Netz zugeführt wird, das eine Auslöseeinheit für eine Insassenschutz-Einrichtung steuert, wobei zum Erkennen auch des Verlaufs des Fahrzeugzusammenstosses insgesamt acht oder mehr Crash-Sensoren vorgesehen sind, die eine dem Ausgangssignal des Beschleunigungssensors gleiche oder ähnliche physikalische Größe liefern, dass diese Ausgangssignale zu einem definierten Zeitpunkt gleichzeitig als Eingangssignale in das neuronale Netz eingegeben werden, und dass durch die Auslöseeinheit mehrere Insassenschutzeinrichtungen entsprechend der Schwere und des Verlaufs des Fahrzeugzusammenstosses gesteuert werden.

2. Verfahren nach Anspruch 1, **dadurch gekennzeichnet, daß** die Crash-Sensoren eine Information über die jeweiligen relativen Geschwindigkeiten der Sensor-Orte liefern.

3. Verfahren nach Anspruch 1, **dadurch gekennzeichnet, daß** die Crash-Sensoren eine Information über die jeweilige relative Verschiebung der Sensor-Orte liefern.

4. Verfahren nach einem der Ansprüche 1 bis 3, **dadurch gekennzeichnet, daß** die Crash-Sensoren ebenfalls Beschleunigungssensoren sind.

5. Verfahren nach einem der Ansprüche 1 bis 3, **dadurch gekennzeichnet, daß** die Ausgangssignale der Crash-Sensoren und des Beschleunigungssensors über die Zeit integriert werden.

6. Verfahren nach einem der Ansprüche 1 bis 3, **dadurch gekennzeichnet, daß** die Ausgangssignale der Crash-Sensoren doppelt über die Zeit integriert werden.

7. Verfahren nach einem der Ansprüche 1 bis 6, **dadurch gekennzeichnet, daß** die aus den Ausgangssignalen des Beschleunigungssensors und der Crash-Sensoren gebildeten physikalischen Größen zu aufeinanderfolgenden definierten Zeitpunkten als Eingangssignale in das neuronale Netz eingegeben werden.

## Claims

1. A method for detecting the severity of a vehicle crash, in which the output signal of an acceleration sensor is processed and supplied to a neural network, which controls a triggering unit for an occupant protection device, wherein a total of eight or more crash sensors are provided to also detect the course of the vehicle crash, the crash sensors supplying a physical variable which is the same or similar to the output signal of the acceleration sensor, wherein these output signals are input simultaneously into the neural network as input signals at a defined instant, and wherein a plurality of occupant protection devices are controlled by the triggering unit according to the severity and the course of the vehicle crash.

2. A method according to claim 1, **characterised in that** the crash sensors supply information about the respective relative speeds of the sensor sites.

3. A method according to claim 1, **characterised in that** the crash sensors supply information about the respective relative displacement of the sensor sites.

4. A method according to any one of claims 1 to 3, **characterised in that** the crash sensors are also acceleration sensors.

5. A method according to any one of claims 1 to 3, **characterised in that** the output signals of the crash sensors and of the acceleration sensor are integrated over time.

6. A method according to any one of claims 1 to 3, **characterised in that** the output signals of the crash sensors are integrated twice over time.

7. A method according to any one of claims 1 to 6, **characterised in that** the physical variables formed from the output signals of the acceleration sensor and the crash sensors are input into the neural network at consecutive defined instants as input signals.

## Revendications

1. Procédé pour déterminer l'importance d'une collision entre véhicules, selon lequel le signal de sortie d'un capteur d'accélération est préparé et envoyé à un réseau neuronal qui commande une unité de déclenchement d'un dispositif de protection de l'habitacle,
dans lequel
pour détecter également le déroulement de la collision, il est prévu en tout huit détecteurs de collision ou plus qui délivrent au signal de sortie du capteur d'accélération des grandeurs physiques identiques ou analogues, de sorte que ces signaux de sortie sont introduits simultanément à un instant défini en tant que signaux d'entrée dans le réseau neuronal, et que plusieurs dispositifs de protection d'habitacle sont commandés par un dispositif de déclenchement, en correspondance avec l'importance et avec le déroulement de la collision entre véhicules.

2. Procédé selon la revendication 1,
**caractérisé en ce que**
les capteurs de collision délivrent une information sur les vitesses relatives des points où se trouvent les capteurs.

3. Procédé selon la revendication 1,
**caractérisé en ce que**
les capteurs de collision délivrent une information sur le déplacement relatif des points où se trouvent les capteurs.

4. Procédé selon une des revendications 1 à 3,
**caractérisé en ce que**
les capteurs de collision sont également des capteurs d'accélération

5. Procédé selon une des revendications 1 à 3,
**caractérisé en ce que**
les signaux de sortie des capteurs de collision et du capteur d'accélération sont intégrés par rapport au temps.

6. Procédé selon une des revendications 1 à 3,
**caractérisé en ce que**
les signaux de sortie des capteurs de collision sont intégrés doublement par rapport au temps.

7. Procédé selon une des revendications 1 à 6,
**caractérisé en ce que**
les grandeurs physiques, établies à partir des signaux de sortie du capteur d'accélération et des capteurs de collision, sont introduites dans le réseau neuronal en tant que signaux d'entrée, à des instants définis successifs.
